(19) Europäisches Patentamt
European Patent Office
Office européen des brevets

(11) **EP 2 067 566 A1**

(12) **EUROPEAN PATENT APPLICATION**

(43) Date of publication:
**10.06.2009 Bulletin 2009/24**

(51) Int Cl.:
*B23K 35/02* (2006.01)    *B23K 35/30* (2006.01)
*B23K 35/362* (2006.01)    *B23K 35/368* (2006.01)

(21) Application number: **08018810.5**

(22) Date of filing: **28.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **30.11.2007 JP 2007309881**

(71) Applicant: **Nippon Steel & Sumikin Welding Co., Ltd.**
**Chuo-ku**
**Tokyo 104-0045 (JP)**

(72) Inventor: **Nakazawa, Hiroshi**
**Narashino-shi**
**Chiba 275-0001 (JP)**

(74) Representative: **Vossius & Partner**
**Siebertstrasse 4**
**81675 München (DE)**

(54) **Flux-cored wire for submerged arc welding of low-temperature steel and a method for welding using the same**

(57)    A flux-cored wire for submerged arc welding of low-temperature steel and a welding method using the wire by way of which weld metal with excellent mechanical performance, excellent bead shapes and excellent welding activity can be obtained even under high-speed welding condition is to be provided.

[Means to solve the object] A flux-cored wire for submerged arc welding of low-temperature steel filled with flux in a steel sleeve, characterized in that either the steel sleeve or the flux, or both of them in total in total contains 0.02-0.30% C, 0.08-0.5% Si, 1.2-3.0% Mn, 0.5-3.5% Ni and 0.03-0.8% Mo with respect to the total weight % of the wire, that the flux contains 0.01-0.27% C and 2-15% $CaF_2$, that the residue consists of Fe in the steel sleeve, and Fe, iron powders and incidental impurities in alloy powders, that the total hydrogen content in the wire is 50ppm or lower, and that the flux filling ratio of the flux in the above-mentioned component is between 10% and 30%.

[Figure 2]

1 Welding Chip
2 Wire
Welding Direction

EP 2 067 566 A1

**Description**

The present invention relates to a flux-cored wire for submerged arc welding of a low-temperature steel for use in welding at storage tanks for liquefied petroleum gas, cryogenic apparatuses, steel constructions for cold regions and the like, and a welding method using the wire. The present invention relates especially to a flux-cored wire for submerged arc welding of a low-temperature steel by way of which weld metal with excellent mechanical performance, excellent bead shapes and excellent welding activity can be obtained even under high-speed welding condition, and a welding method using the wire.

Submerged arc welding is applied in a variety of applications such as pipe production, steel frames, bridges, vehicles and the like because highly efficient and stable welding activity and a good mechanical performance of weld metal can be obtained. Low-temperature steels have been widely used in recent years due to the development of an energy industry, and the ratio of using them has been increasing every year. Therefore, it is desired to make the submerged arc welding with higher quality to improve productivity of submerged arc welding using low-temperature steels and to ensure its working safety and durability. In particular, the welding is highly desired to be performed highly efficient, and weld metal is highly desired to be toughened.

Conventionally, solid wires containing alloy components such as Ni, Mn, Mo and the like are mainly used as a wire for submerged arc welding of low-temperature steels in order to toughen weld metal. But when the amount of the alloy components in a wire is increased for the purpose of toughening of weld metal, the wire itself has high strength, so that the wire is hardened at the wire drawing process during producing welding wire due to added work hardening. If the wire is hardened, worn dies and broken wire appear more often, making the wire production difficult.

In order to solve this problem, wire strength has been generally reduced by heat treatment during wire drawing. If there is much amount of alloy components, wire transformation temperature is lowered, so that wire is needed to be retained for a longer time in order to soften it by annealing treatment. In the case it is softened by way of high-temperature normalizing, the wire tends to transform into a structure with high strength. Accordingly the wire is generally softened by setting a thermal processing temperature low, combined with long-time retention and slow cooling, so that the productivity is very low.

In the case that a solid wire with high strength is used for welding, the wire is difficult to be straightened, so that decentering with respect to the groove center is easily caused, and that favorable beads cannot be obtained. As stated above, the solid wire with high strength had a problem of a low productivity and weldability. In order to avoid the problems of the solid wire, various flux-cored wires have been developed. But, because oxygen content in the weld metal should be low in order to obtain weld metal with high toughness, and because a flux-cored wire should have low amount of hydrogen as welding with low-temperature steel easily causes cold cracking (hydrogen cracking), conventional flux-cored wires were not easily applied for the purpose of the present invention.

There are other welding methods using wire with low strength containing a small amount of alloy components, and baking flux (bonded flux) containing a small mount of alloy components. This method was developed considering productivity of the solid wire and weldability such as wire feedability. As the bonded flux, however, is slow in melting the flux compared to a melt flux, it is difficult to be applied for high-speed welding. It has other problems, for example, that the bonded flux is hygroscopic, toughness of the resulting weld metal shows rather deviated values, and that the resulting beads show slight convex shapes, so that a favorable welding activity is difficult to be obtained at high-speed welding.

Considering these problems, a wire for submerged arc welding with good wire productivity and weldability from which highly tough weld metal can be obtained has been tried to be developed. A composite wire with low tensile strength for submerged arc welding, for example, is disclosed in JP-A-2006-142377. Though the productivity and feedability of the wire was improved, oxygen content in weld metal is increased due to high oxygen content in this flux-cored wire, so that favorable toughness under low-temperature can not be obtained. In addition, as the flux-cored wire has seams on its cross section, it absorbs moisture in the air. As a result, it is insufficient to decrease the amount of the moisture in the flux. Diffusible hydrogen content in the weld metal increases, so that cold cracking is easily caused after welding.

JP-A-48-85443 discloses.a composite wire for submerged arc welding, where flux to be filled contains highly basic slag-forming components, which is used in combination with neutral flux or weekly basic flux so as to obtain a favorable welding activity and weld metal with high toughness. But as Si, Mn, Mo and Ni is added in the wire sleeve material, the wire itself has high tensile strength and is inferior in wire feedability. In addition, because flux to be filled contains a large amount of slag forming components, it is in short of alloy components, so that the wire does not fulfill requirement of further toughening of the wire.

A composite wire with high toughness for submerged arc welding is disclosed in JP-A-49-103858. Though toughening of weld metals and improving weldability are aimed at by this application, the two are not compatible with the wire component disclosed in JP-A-49-103858.

A seamless flux-cored wire with a large diameter for high-heat input submerged arc welding of low-temperature steel is disclosed in JP-A-61-242791. With the wire component disclosed in JP-A-61-242791, however, favorable toughness of the weld metal cannot be obtained. In addition, as the wire diameter is large, i.e. 4.5-10mm, the wire itself has high rigidity, although a low amount of alloy components is contained in a steel material applied by a wire sleeve, so that wire feedability is deteriorated, and that the wire may be used only for applications with a large groove at a weld zone. As a result, its application scope is limited, resulting in reducing production efficiency.

An object of the invention is to provide a flux-cored wire for submerged arc welding of low-temperature steel by way of which weld metal with excellent mechanical performance, excellent bead shapes and excellent weldabilitycan be obtained even under high-speed welding condition, and to provide a method for welding using the wire.

The object above can be achieved by the features defined in the claims.

Particularly, a gist of the present invention is that the flux-cored wire filled with flux in a steel sleeve for submerged arc welding of low-temperature steel is characterized in that the steel sleeve and/or the flux, in total contains 0.02-0.30% C, 0.08-0.5% Si, 1.2-3.0% Mn, 0.5-3.5% Ni and 0.03-0.8% Mo with respect to the total mass% of the wire, that the flux contains 0.01-0.27% C and 2-15% $CaF_2$, that the residue consists of Fe in the steel sleeve, and Fe in alloy powders, iron powders and incidental impurities, that the total hydrogen content in the wire is 50ppm or lower, and that the flux filling ratio in the above-mentioned component is between 10% and 30%.

It is also a gist of the present invention that the flux-cored wire for submerged arc welding of low-temperature steel is characterized in that the steel sleeve does not have any seams.

It is also a gist of the present invention that a submerged arc welding method for low-temperature steel is characterized in that melt flux with basicity BA expressed in the below-mentioned formula (1) being 1.0-4.0, and the above-mentioned wire are welded in combination:

$$\text{basicity BA} = [CaO+MgO+CaF_2+BaO+0.5\times(MnO+FeO)] / [SiO_2+0.5\times(Al_2O_3+TiO_2+ZrO_2)] \quad ...(1),$$

wherein each component stands for mass % of each component.

By the wire for submerged arc welding of low-temperature steel and the welding method of the present invention, it is possible in submerged arc welding to easily produce a wire containing a large amount of alloy components, to obtain weld metal with high toughness containing low amount of oxygen content in it, to obtain good weldability and good bead shapes, and to obtain a high-quality weld zone without weld defect as diffusible hydrogen content in the weld metal can be restricted to be low.

The invention is described in conjunction with the drawings, in which:

Figure 1 illustrates a groove shape of a test plate for a multi-pass welding test with a joint butt used in the examples of the present invention;
Figure 2 illustrates schematically a welding method of examples of the present invention, and
Figure 3 illustrates a groove shape of a test plate for a horizontal fillet welding test used in the examples of the present invention, and also schematically illustrates a welding method.

In order to achieve the objects, inventors of the present invention have examined on wire component which consists of a steel sleeve and filling flux, on components of the filling flux, on the total hydrogen content of the wire, on flux filling ratio, and on the basicity of melt flux which is used in combination with the wire.

For toughening weld metal, it is most important to optimize oxygen balance of the weld metal and to optimize crystalline grain structure by adding alloy elements. For this purpose, the inventors of the present invention first applied Mg and Al as strong deoxidizing agents to control the oxygen content in the weld metal. But as raw material of Mg itself, which is known as hydrogen storing alloy, contains a large amount of hydrogen, diffusible hydrogen content is increased in the weld metal, which causes cold cracking. In addition, as Mg causes a reaction of $Mg+2H_2O \rightarrow Mg(OH)_2+H_2$ during welding and produces hydrogen gas, a lot of blowholes, pits and pockmarks were produced.

Al, on the other hand, produces a large amount of coarse Al oxide in the weld metal. The coarse oxide induces breaking of low-temperature steel mainly consisting of acicular ferrite structure, which reduced toughness remarkably.

From the mentioned above, although it was possible to easily adjust and control oxygen content in weld metal by a small amount of Mg and Al contained in the wire, these elements were difficult to be applied due to problems such as production of weld defects like cold cracking, blowholes, pits, pockmarks and the like, and reduced strength and toughness of the weld metal. Therefore, instead of Mg and Al, C was newly found to be added as a strong deoxidizing agent. It was recognized here that a large amount of C had better been contained in the flux rather than the steel sleeve so as to make deoxidization effect of C significantly large. This is because it was recognized that C added in the steel sleeve tended to be subject to oxidative consumption before it was bonded with oxygen in the melting metal, because welding current is high in the submerged arc welding.

Accordingly, in order to retain C until it reaches to a metal pool for deoxidization of weld metal without being subject to oxidative consumption, C was determined to be added to flux. In the case that C was added to a steel sleeve so as to control oxygen content in the weld metal, C was needed to be added in a large amount considering the oxygen consumption, which in turn raised tensile strength of the wire itself, resulting in inferior productivity, inferior wire feedability and inferior weldability.

By adjusting wire components and flux filling ratio and by employing low-hydrogen raw materials and so on, it was possible to obtain weld metal having an excellent mechanical performance. In addition, by removing seam from a steel sleeve, annealing during a production process has become possible, so that hydrogen content in the wire can be further reduced. As pickling and plating become possible, so that a wire surface could be cleaned with increased corrosion resistance, resulting in good wire feedability and increased weldability.

With submerged arc welding, flux is spread into a groove so as to feed wire mechanically in the flux and perform welding. With this method, flux component composition greatly influences weldability and mechanical properties of weld metal. By employing melt flux as flux, here, high-speed welding have become possible, and beautiful bead appearance with flat and fine wave bead shapes could be obtained. By limiting basicity of the flux, favorable mechanical properties of the weld metal could be obtained, too.

From the above-mentioned result, it was found that employing a wire containing a proper amount of C, Si, Mn, Ni, Mo and $CaF_2$ in a wire and limiting a filling ratio of flux made it possible to obtain wire with favorable productivity and weld metal with high toughness.

Below, the flux-cored wire for submerged arc welding of low-temperature steel of the present invention will be described with respect to limitation reasons on the component and the like.

C in the entire wire is an important element for ensuring the weld metal to be strengthened by forming solid solution, and also for reducing oxygen content in the arc atmosphere as well as in the weld metal by reacting with oxygen in the arc. If the total amount of C in either the steel sleeve or the flux, or both of them in total (hereinafter referred to as "wire component") is less than 0.02 mass % (hereinafter referred to as "%"), the above-mentioned deoxidization effect and the strengthening effect are not obtained sufficiently, and the toughness of the wire component is reduced. If it is more than 0.30%, on the other hand, C in the weld metal is increased, a structure mainly consisting of martensite is produced, resulting in making the strength too high and reducing the toughness. Accordingly, the amount of C in the wire component is set to be 0.02-0.30%.

Because C works more effectively for increasing the deoxidization effect by C if the amount of C is increased in the flux rather than in the steel sleeve, the amount of C in the flux is set to be 0.01-0.27%. If the ratio of C in the flux is less than 0.01%, sufficient deoxidization effect cannot be obtained, resulting in deteriorating toughness. If it is over 0.27%, on the other hand, deoxidization occurs too much, and strength of the weld metal is too high, resulting in deteriorating toughness.

Si in the wire component is an important element for strengthening weld metal and increasing toughness of the weld metal. As it is bounded to oxygen during welding to become a slag component, oxygen content in the weld metal can be reduced. If the ratio of Si in the wire component is less than 0.08%, the strength of the weld metal is so low that the oxygen content is increased and that the toughness is reduced. On the other hand, if it is over 0.5%, weld metal matrix is strengthened by forming solid solution, but the ferritic grain is coarsened, so that the toughness is remarkably reduced. Accordingly, the ratio of Si in the wire component is set to be 0.08-0.5%.

Mn in the wire component is an effective component to improve hardenability and strength of the weld metal. If the ratio of Mn in the wire component is less than 1.2%, hardenability cannot be obtained enough so that the weld metal cannot be strong enough. If it is over 3.0%, on the other hand, hardenability becomes too much, decreasing the strength of the weld metal and reducing the toughness of the weld metal. Accordingly, the ratio of Mn in the wire component is set to be 1.2-3.0%.

Ni in the wire component works for ensuring the strength and the toughness of the weld metal. If the ratio of Ni in the wire component is less than 0.5%, the strength of the weld metal is too low, so that toughness is reduced. If it is over 3.5%, on the other hand, Ni, which is an austenite stabilized element, coarsens the austenite grain, resulting in deteriorating toughness of the weld metal. Accordingly, the ratio of Ni in the wire component is set to be 0.5-3.5%.

Mo in the wire component works for ensuring the strength of the weld metal. If the ratio of Mo in the wire component is less than 0.03%, the strength is too low. If it is over 0.8%, on the other hand, intermetallic compounds are produced in the weld metal, which hardens the weld metal remarkably, resulting in reducing toughness of the weld metal. Accordingly, the ratio of Mo in the wire component is set to be 0.03-0.8%.

$CaF_2$ in the flux is an important composition for increasing toughness of the weld metal. It is also effective to decrease oxygen partial pressure in the arc atmosphere during welding and consequently to reduce oxygen amount in the weld metal. If the ratio of $CaF_2$ in the wire component is less than 2%, the oxygen content in the weld metal is so high that the toughness is reduced. If it is over 15%, on the other hand, arc becomes unstable and the amount of slag components in the wire is increased, so that deposited amount is reduced and consequently deposition efficiency is lowered. Accordingly, the ratio of $CaF_2$ in the wire component is set to be 2-15%.

If the total amount of hydrogen contained in the wire increases, weld defects are caused, i.e., blow wholes, pits and pockmarks of hydrogen gas are produced at welding. In addition, as diffusible hydrogen in the weld metal increases, cold cracking is produced. Accordingly, the total amount of hydrogen contained in the wire needs to be set under 50ppm in order to avoid the weld defects and the cold cracking.

Flux filling ratio in the above-mentioned component is set to be 10-30%. If it is less than 10%, required amount of alloy components for the targeted high toughening cannot be obtained, so that sufficient mechanical performance cannot be obtained. If it is over 30%, on the other hand, flux tends to enter at the welding into a seam region, in which seam have been removed by welding after forming during production of a seamless flux-cored wire. As a result weld defect is produced, and productivity is lowered. Furthermore, by employing a large flux filling ratio, oxygen content in the filled flux and consequently in the weld metal increases, resulting in lowering the toughness.

Melt flux with which welding is performed in combination with the above-mentioned wire has a basicity BA expressed in the below-mentioned formula of 1.0-4.0. If the basicity BA is less than 1.0, though bead appearance becomes beautiful with flat and fine wave bead shapes, arc atmosphere becomes acid due to the low basicity, and then oxygen content in the weld metal increases, resulting in low toughness. If it is over 4.0, on the other hand, beads have convex forms with coarse wave shapes, resulting in inferior weldability.

$$\text{basicity BA} = [CaO + MgO + CaF_2 + BaO + 0.5 \times (MnO + FeO)] / [SiO_2 + 0.5 \times (Al_2O_3 + TiO_2 + ZrO_2)] \dots (1)$$

Furthermore, in order to reduce oxygen content in the weld metal, the main component of the filled flux is preferably composed of metal powder, and oxides, which could be slag forming agents, are preferably avoided. The ratio of P and S are preferably limited to be low as much as possible as they both tend to produce compounds with low melting points, which in turn reduces toughness. The flux-cored wire for submerged arc welding of low-temperature steel and the welding method of the present invention preferably employs a wire with an outer diameter of 1.0-4.0mm so as to enable welding with stable arc and wire feedability and with higher deposition efficiency.

As the flux-cored wire for submerged arc welding of low-temperature steel of the present invention has a cross-section shape without seams (hereinafter referred to as "seamless") on its steel sleeve, it has an excellent hygroscopic resistance. It can also reduce diffusible hydrogen content in the weld metal as much as possible because annealing can be performed during the production.

A usual flux-cored wire with seams, which is formed from a steel hoop without welding the seam region, it tends to have more amount of diffusible hydrogen in the weld metal because the filled flux easily absorbs moisture and because annealing cannot be performed during the production.

The flux-cored wire with seams cannot be annealed during production because alloy agents in the filled flux would be oxidized by annealing and become oxides due to the existence of a slight gap in the seam region. Therefore, the oxygen content in the weld metal would increase, and a predetermined quenchable could not be obtained, resulting in reduced strength and toughness of the weld metal.

As a flux-cored wire with seam has an asymmetric cross-section, the wire itself tends to be twisted, and to cause decentering with respect to the groove center at welding. A seamless wire, on the other hand, has a cross-section out of a concentric circle, being symmetric in all directions, so that an obtained wire can be easily handled and be not produced rarely twisting.

As seamless wires can be subject to pickling or plating treatment during its production process, so that a wire surface can be cleaned with increased corrosion resistance, resulting in good wire feedability and increased weldability. As mentioned above, because a flux-cored wire with seam, on the other hand, has a slight gap in the seam region, as mentioned above, pickling and plating are not possible, so that a wire surface condition is inferior to that of the seamless wire.

The flux-cored wire for submerged arc welding of low-temperature steel of the present invention is produced by filling a steel pipe with flux by oscillation, shrinking and then annealing so as to make a pre-product wire. Alternatively, a steel hoop is formed into a U-letter form during forming process, is filled with flux, and then is formed into an O-letter form so as to weld a seam region. The strip is then reduced in diameter and annealed so as to make a pre-product wire. Those pre-product wires are then subject to pickling and plating, if necessary, and to wire drawing so as to make products with a predetermined diameter.

[Examples]

Below, the effect of the present invention will be described more in detail in reference to Examples. Using steel sleeves shown in Table 1, flux-cored wires with various components shown in Table 2 were made as prototypes. As steel pipe F1 shown in Table 1 was filled with flux by oscillation, reduced in diameter and then annealed so as to make a pre-product wire. As steel hoop F2 was formed into a U-letter form during forming process, filled with flux, was formed into an O-letter form so as to weld a seam region, and then was reduced in diameter, annealed so as to make a pre-product middle wire. As steel hoop F3 was formed into a U-letter form during forming process, filled with flux, and then formed into a wrap form and reduced in diameter so as to make a pre-product wire. Each of the pre-product wire was subject to wire drawing until it had a diameter of 2.4mm. With respect to the total hydrogen content of the wire, this value on a wire with a diameter of 2.4mm was measured by way of high-frequency heating of thermal conductivity type.

[Table 1]

| Sleeve Symbol | Sleeve Shape | Seam Shape | Chemical Component mass % | | | | | |
|---|---|---|---|---|---|---|---|---|
| | | | C | Si | Mn | P | S | Al |
| F1 | Pipe | Seamless | 0.02 | 0.01 | 0.31 | 0.009 | 0.005 | 0.007 |
| F2 | Steel Hoop | Seamless | 0.06 | 0.02 | 0.29 | 0.008 | 0.005 | 0.008 |
| F3 | Steel Hoop | with seam | 0.04 | 0.01 | 0.33 | 0.008 | 0.006 | 0.007 |

[Table 2]

| Classification | Wire Symbol | Sleeve Symbol | Flux Filling Ratio (mass %) | Wire Component (mass %) | | | | | | | | | Total Hydrogen Content in Wire (ppm) |
|---|---|---|---|---|---|---|---|---|---|---|---|---|---|
| | | | | C | | | Si | Mn | Ni | Mo | $CaF_2$ | Others* | |
| | | | | Sleeve | Flux | Total | | | | | | | |
| Examples of the Present Invention | W1 | F1 | 16 | 0.02 | 0.01 | 0.03 | 0.15 | 1.54 | 0.65 | 0.65 | 2.05 | bal. | 39 |
| | W2 | F2 | 22 | 0.05 | 0.25 | 0.30 | 0.22 | 1.65 | 0.72 | 0.72 | 14.97 | bal. | 22 |
| | W3 | F2 | 11 | 0.05 | 0.13 | 0.18 | 0.08 | 2.53 | 0.65 | 0.55 | 3.54 | bal. | 22 |
| | W4 | F1 | 29 | 0.01 | 0.22 | 0.23 | 0.48 | 2.81 | 1.68 | 0.21 | 10.82 | bal. | 18 |
| | W5 | F1 | 28 | 0.01 | 0.26 | 0.27 | 0.23 | 1.24 | 2.23 | 0.23 | 11.22 | bal. | 35 |
| | W6 | F2 | 27 | 0.04 | 0.05 | 0.09 | 0.21 | 2.98 | 0.58 | 0.28 | 6.87 | bal. | 32 |
| | W7 | F1 | 12 | 0.02 | 0.01 | 0.03 | 0.42 | 1.65 | 0.52 | 0.35 | 4.68 | bal. | 19 |
| | W8 | F2 | 15 | 0.05 | 0.11 | 0.16 | 0.33 | 1.29 | 3.49 | 0.22 | 6.69 | bal. | 49 |
| | W9 | F1 | 20 | 0.02 | 0.18 | 0.20 | 0.41 | 1.44 | 3.05 | 0.03 | 8.78 | bal. | 11 |
| | W10 | F2 | 18 | 0.05 | 0.08 | 0.13 | 0.12 | 1.68 | 0.67 | 0.78 | 5.45 | bal. | 15 |
| | W11 | F3 | 16 | 0.03 | 0.11 | 0.14 | 0.19 | 1.98 | 1.02 | 0.35 | 7.85 | bal. | 50 |

(continued)

EP 2 067 566 A1

| Classification | Wire Symbol | Sleeve Symbol | Flux Filling Ratio (mass %) | Wire Component (mass %) | | | | | | | | | Total Hydrogen Content in Wire (ppm) |
|---|---|---|---|---|---|---|---|---|---|---|---|---|---|
| | | | | C | | | Si | Mn | Ni | Mo | CaF$_2$ | Others* | |
| | | | | Sleeve | Flux | Total | | | | | | | |
| Comparative Examples | W12 | F1 | 9 | 0.02 | 0.02 | 0.04 | 0.09 | 1.22 | 0.51 | 0.04 | 5.52 | bal. | 62 |
| | W13 | F1 | 22 | 0.02 | 0.05 | 0.07 | 0.07 | 1.81 | 1.01 | 0.18 | 16.05 | bal. | 36 |
| | W14 | F1 | 25 | 0.02 | 0.09 | 0.11 | 0.61 | 2.15 | 1.88 | 0.31 | 6.63 | bal. | 43 |
| | W15 | F2 | 31 | 0.04 | 0.15 | 0.19 | 0.19 | 1.44 | 1.25 | 0.21 | 11.51 | bal. | 46 |
| | W16 | F2 | 12 | 0.05 | 0.20 | 0.25 | 0.15 | 1.64 | 2.02 | 0.4 | 1.41 | bal. | 21 |
| | W17 | F2 | 21 | 0.05 | 0.04 | 0.09 | 0.27 | 1.58 | 0.97 | 0.02 | 8.56 | bal. | 25 |
| | W18 | F1 | 27 | 0.01 | 0.002 | 0.012 | 0.16 | 2.05 | 1.08 | 0.09 | 6.58 | bal. | 31 |
| | W19 | F1 | 14 | 0.02 | 0.28 | 0.30 | 0.21 | 1.87 | 1.56 | 0.47 | 5.52 | bal. | 29 |
| | W20 | F2 | 15 | 0.05 | 0.003 | 0.053 | 0.24 | 1.91 | 1.69 | 0.17 | 7.74 | bal. | 25 |
| | W21 | F2 | 18 | 0.05 | 0.26 | 0.31 | 0.13 | 2.54 | 3.11 | 0.69 | 6.62 | bal. | 35 |
| | W22 | F3 | 22 | 0.03 | 0.12 | 0.15 | 0.31 | 2.23 | 1.85 | 0.37 | 10.25 | bal. | 72 |
| | W23 | F2 | 28 | 0.04 | 0.17 | 0.21 | 0.22 | 1.11 | 1.56 | 0.24 | 12.24 | bal. | 26 |
| | W24 | F1 | 17 | 0.02 | 0.06 | 0.08 | 0.16 | 3.15 | 1.29 | 0.29 | 4.25 | bat. | 28 |
| | W25 | F2 | 18 | 0.05 | 0.13 | 0.18 | 0.24 | 1.74 | 1.04 | 0.92 | 6.66 | bal. | 22 |
| | W26 | F2 | 11 | 0.05 | 0.06 | 0.11 | 0.20 | 1.49 | 0.41 | 0.12 | 5.57 | bal. | 36 |
| | W27 | F1 | 21 | 0.02 | 0.05 | 0.07 | 0.23 | 1.56 | 3.68 | 0.34 | 8.21 | bal. | 16 |

*: Others includes Fe in the steel sleeve, and Fe in alloy powders, iron powders and inevitable impurities.

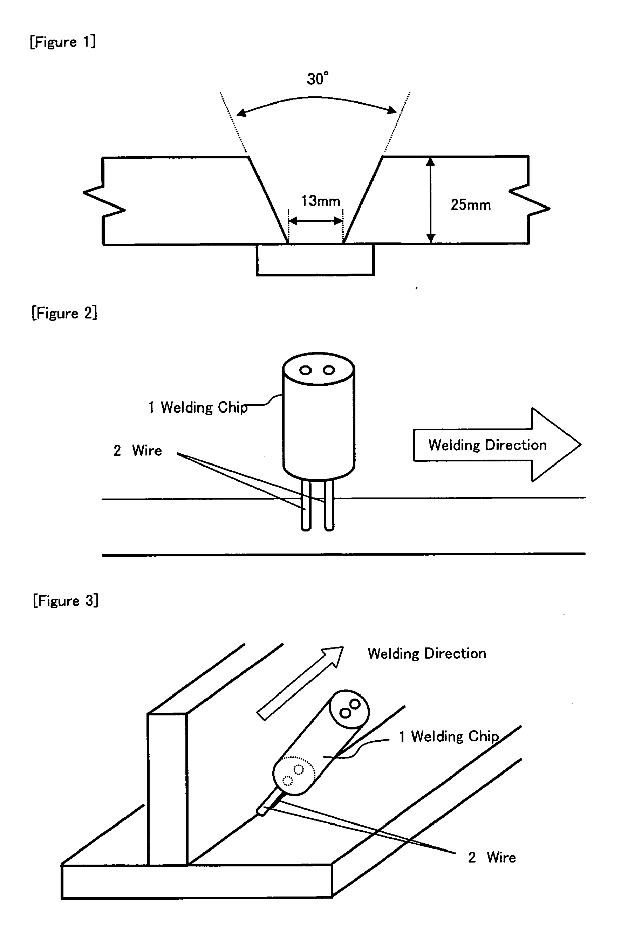

Welding activity and a mechanical performance of the weld metals at multi-pass welding were evaluated using various flux-cored wires shown in Table 2 and melt flux shown in Table 3 in combination. A plate with thickness of 25mm shown in Table 4 was worked to have a groove with a shape shown in Figure 1, i.e. with a groove angle of 30 degrees and a root opening of 13mm. Then, welding tests were conducted with welding conditions shown in Table 5 by way of two-wire-one-electrode method shown in Figure 2 which shows that two wires (2) are fed through a welding chip (1). For evaluating welding activity horizontal filled welding was performed, too. Here, a plate with thickness of 25mm shown in Table 4 was assembled into a T-letter form as shown in Figure 3, and then wires were set. Then, welding tests were conducted with welding conditions shown in Table 6 by way of two-wire-one-electrode method. Melt flux shown in Table 3 had been granulated into a grain size of 20x200mesh after being melted for use.

[Table 3]

| Symbol | Grain Size Mesh | Flux Component (mass %) | | | | | | | | | | Basicity BA |
|---|---|---|---|---|---|---|---|---|---|---|---|---|
| | | $SiO_2$ | $Al_2O_3$ | CaO | MnO | MgO | $CaF_2$ | $TiO_2$ | BaO | $ZrO_2$ | Others | |
| MF1 | 20 × 200 | 21 | 25 | 22 | - | - | 18 | 3 | - | 3 | 8 | 1.10 |
| MF2 | | 9 | 16 | 24 | - | 5 | 35 | - | 3 | - | 8 | 3.94 |
| MF3 | | 10 | 25 | 22 | 2 | 3 | 30 | - | - | - | 8 | 2.49 |
| MF4 | | 18 | 32 | 14 | 5 | 2 | 15 | 4 | - | 2 | 8 | 0.91 |
| MF5 | | 6 | 19 | 20 | 4 | 3 | 41 | 1 | - | - | 6 | 4.13 |
| Basicity BA=[CaO+MgO+$CaF_2$+BaO+0.5 × (MnO+FeO)]/($SiO_2$+0.5 × ($Al_2O_3$+$TiO_2$+$ZrO_2$)] | | | | | | | | | | | | |

[Table 4]

| Steel Plate Thickness mm | Chemical Component (mass %) | | | | | |
|---|---|---|---|---|---|---|
| | C | Si | Mn | P | S | Al |
| 25 | 0.05 | 0.11 | 1.98 | 0.007 | 0.002 | 0.013 |

[Table 5]

| Wire Diameter mm | Welding Current A | Welding Voltage V | Welding Speed cm/min | Welding Heat Input kJ/cm | Power Supply Polarity | Welding Type |
|---|---|---|---|---|---|---|
| 2.4 | 900 | 30 | 36 | 45.0 | DCEP | 2-Wire-1-Electrode multi-pass welding with joint butt |

[Table 6]

| Wire Diameter mm | Welding Current A | Welding Voltage V | Welding Speed cm/min | Welding Heat Input kJ/cm | Power Supply Polarity | Welding Type |
|---|---|---|---|---|---|---|
| 2.4 | 900 | 30 | 100 | 16.2 | DCEP | 2-Wire-1-Electrode Horizontal Fillet Welding |

Each prototype wire was evaluated based on the examination with respect to productivity of wire production, amount of diffusible hydrogen in the weld metal, bead shapes after multi-pass welding and horizontal fillet welding, respectively, slag detachability, existence of weld defects as well as oxygen content, tensile strength and toughness of the weld metal, respectively.

Regarding wire productivity, it was examined whether filled flux enters into a welding region during the production of a flux-cored wire or not, and whether wire breaking occurred during wire drawing, when the seam region was weld during producing a seamless flux-cored wire. Diffusible hydrogen content in the weld metal was measured in inconformity with JIS Z 3118. It was measured using various flux-cored wires shown in Table 2 and melt flux shown in Table 3 in combination. If its amount was 6ml/100g or below, the result was evaluated as good.

With respect to bead shapes, if beads showed uniform width and height and show a beautiful form, the bead shapes were evaluated as "good". If a bead showed, on the other hand, inferior result even in one aspect, it was evaluated as "bad".

With respect to slag detachability, if a slag was detached spontaneously or detached easily after the slag was slightly beaten by a hammer or chisel, the detachability was evaluated as "good". If a slag was not detached by slight beating, the detachability was evaluated as "bad".

With respect to weld defects, undercuts, blowholes, pits, slag inclusion, incomplete fusion, hot cracking as well as cold cracking were inspected by way of appearance inspection, X-ray fluoroscopy and ultrasonic inspections. If none of the defects were found at all, the inspection result was regarded as "good". If even one defect was found, the result was regarded as "bad". Note that the cold cracking was examined by way of X-ray fluoroscopy and ultrasonic inspections 48 hours after welding completion.

With respect to mechanical performance of the weld metal, test pieces for Charpy impact test (JIS Z 2202 4) and for tension test (JIS Z 2201 A1) were collected at the position around 7mm under the surface of a steel plate for multi-peace welding test so as to conduct mechanical tests. Toughness was evaluated by way of Charpy impact test conducted at -60°C based on an average value of result values of three repeated tests. 90J or more of absorption energy at the Charpy impact test of was regarded as "good". 560MPa or more was regarded as a result on the tensile strength evaluation. The test results were summarized in Table 7.

[Table 7]

| Classification | Wire Symbol | Productivity | Combined Flux | Diffusible Hydrogen Content (ml/100g) | Weldability | | | | | | Oxygen Content of Weld Metal (ppm) | Mechanical property | | Overall Evaluation |
|---|---|---|---|---|---|---|---|---|---|---|---|---|---|---|
| | | | | | Multi-pass Welding | | | Horizontal Fillet Welding | | | | Tensile Strength (MPa) | Absorption Energy (J) | |
| | | | | | Bead Shape | Slag Detachability | Weld Defect | Bead Shape | Slag Detachability | Weld Defect | | | | |
| Examples of Present Invention | W1 | Good | MF1 | 4.5 | Good | Good | Good | Good | Good | Good | 410 | 571 | 98 | Good |
| | W2 | Good | MF2 | 3.4 | Good | Good | Good | Good | Good | Good | 354 | 580 | 102 | Good |
| | W3 | Good | MF3 | 2.9 | Good | Good | Good | Good | Good | Good | 384 | 690 | 110 | Good |
| | W4 | Good | MF3 | 5.6 | Good | Good | Good | Good | Good | Good | 369 | 695 | 125 | Good |
| | W5 | Good | MF2 | 4.6 | Good | Good | Good | Good | Good | Good | 345 | 568 | 131 | Good |
| | W6 | Good | MF2 | 3.9 | Good | Good | Good | Good | Good | Good | 425 | 698 | 112 | Good |
| | W7 | Good | MF2 | 3.2 | Good | Good | Good | Good | Good | Good | 438 | 578 | 95 | Good |
| | W8 | Good | MF1 | 4.6 | Good | Good | Good | Good | Good | Good | 325 | 690 | 132 | Good |
| | W9 | Good | MF3 | 3.8 | Good | Good | Good | Good | Good | Good | 378 | 637 | 124 | Good |
| | W10 | Good | MF3 | 3.7 | Good | Good | Good | Good | Good | Good | 385 | 691 | 100 | Good |
| | W11 | Good | MF1 | 5.5 | Good | Good | Good | Good | Good | Good | 421 | 581 | 96 | Good |

| Classification | Wire Symbol | Productivity | Combined Flux | Diffusible Hydrogen Content (ml/100g) | Weldability | | | | | | Oxygen Content of Weld Metal (ppm) | Mechanical property | | Overall Evaluation |
|---|---|---|---|---|---|---|---|---|---|---|---|---|---|---|
| | | | | | Multi-pass Welding | | | Horizontal Fillet Welding | | | | Tensile Strength (MPa) | Absorption Energy (J) | |
| | | | | | Bead Shape | Slag Detachability | Weld Defect | Bead Shape | Slag Detachability | Weld Defect | | | | |
| Comparative Examples | W12 | Good | MF1 | 6.7 | Good | Good | Bad | Good | Good | Bad | 402 | 504 | 75 | Bad |
| | W13 | Good | MF2 | 3.6 | Bad | Good | Good | Bad | Good | Good | 532 | 535 | 70 | Bad |
| | W14 | Good | MF3 | 3.5 | Good | Good | Good | Good | Good | Good | 346 | 572 | 65 | Bad |
| | W15 | Inferior | MF2 | 4.9 | Good | Good | Good | Good | Good | Good | 552 | 584 | 68 | Bad |
| | W16 | Good | MF3 | 3.8 | Good | Good | Good | Good | Good | Good | 544 | 694 | 65 | Bad |
| | W17 | Good | MF4 | 5.1 | Good | Good | Good | Good | Good | Good | 565 | 550 | 63 | Bad |
| | W18 | Good | MF3 | 4.5 | Good | Good | Good | Good | Good | Good | 551 | 523 | 66 | Bad |
| | W19 | Good | MF5 | 3.4 | Bad | Bad | Good | Bad | Bad | Good | 287 | 721 | 83 | Bad |
| | W20 | Good | MF3 | 4.2 | Good | Good | Good | Good | Good | Good | 563 | 672 | 78 | Bad |
| | W21 | Good | MF3 | 3.5 | Good | Good | Good | Good | Good | Good | 273 | 730 | 84 | Bad |
| | W22 | Good | MF2 | 7.1 | Bad | Good | Bad | Bad | Good | Bad | 415 | 699 | 118 | Bad |
| | W23 | Good | MF1 | 3.9 | Good | Good | Good | Good | Good | Good | 420 | 552 | 95 | Bad |
| | W24 | Good | MF3 | 3.6 | Good | Good | Good | Good | Good | Good | 378 | 725 | 78 | Bad |
| | W25 | Good | MF3 | 3.5 | Good | Good | Good | Good | Good | Good | 355 | 751 | 80 | Bad |
| | W26 | Good | MF3 | 3.6 | Good | Good | Good | Good | Good | Good | 354 | 545 | 69 | Bad |
| | W27 | Good | MF2 | 3.2 | Good | Good | Good | Good | Good | Good | 361 | 698 | 86 | Bad |

EP 2 067 566 A1

As is apparent from Tables 2 and 7, wires with wire symbols from W1 to W11, which are Examples of the present invention, had proper amount of C, Si, Mn, Ni and Mo, in the wire component and had proper amount of C and CaF$_2$ in the flux. Therefore, sufficient tensile strength could be obtained, the oxygen content in the weld metal could be kept low, and the absorption energy showed a favorable value.

Regarding these wires, the flux filling ratio was proper, the total amount of hydrogen in the wire was low, wire productivity and bead shapes were fine, amount of the diffusible hydrogen was low, and no weld defect was found. In addition, as the combined fluxes (MF1, MF2 and MF3) had proper basicity BA values, welding activity such as slag detachability and bead shapes showed good result at multi-pass welding and high-speed horizontal fillet welding, and the obtained weld metal showed an excellent mechanical performance. Overall, these wires showed very satisfying results. As the wire with wire symbol W11 is a flux-cored wire with seams, its bead showed a slightly meander shape, but the bead appearance was beautiful.

As the wire with wire symbol W12, which is a comparative example, had a low flux filling ratio, alloy elements were in short, resulting in low tensile strength and absorption energy. As the total hydrogen content in the wire was high, weld defects such as blow wholes, pits, and pockmarks were produced. In addition, as the amount of diffusible hydrogen was high, cold cracking was produced. The wire with wire symbol W13 contained a low amount of Si, the oxygen content in the weld metal was high, resulting in low tensile strength and absorption energy. As the amount of CaF$_2$ was high, arc was unstable, bead shapes were deteriorated. As it had also a large amount of slag component in the wire, the deposition efficiency was low, resulting in deterioration of the welding activity.

As the wire with wire symbol W14 contained much Si, absorption energy showed a low value. As the wire with wire symbol W15 had a high flux filling ratio, flux entered into the seam region at welding during the wire production, resulting in low productivity. Its oxygen content in the weld metal was increased, so that absorption energy showed a low value. The wire with wire symbol W16 had a low amount of CaF$_2$, the oxygen content in the weld metal was high, resulting in a low value in absorption energy.

As the wire with wire symbol W17 contained a small amount of Mo, the tensile strength was low. As flux MF4 used in combination had a low value in basicity BA, the oxygen content in the weld metal increased, resulting in a low value of absorption energy. As the wire with wire symbol W18 contained a small amount of total C, the oxygen content in the weld metal was high, resulting in low values in tensile strength and absorption energy.

As the wire with wire symbol W19 contained a large amount of C in the flux, the oxygen content in the weld metal was low, resulting in a high value in tensile strength and a low value in absorption energy. As flux MF5 used in combination had a high basicity BA value, beads showed convex shapes, resulting in deteriorating slag detachability and causing appearance with coarse wave shapes. As the wire with wire symbol W20 contained a small amount of C in the flux, the oxygen content in the weld metal was high, resulting in a low value in absorption energy.

As the wire with wire symbol W21 contained a large amount of total C, the oxygen content in the weld metal was low, resulting in high tensile strength and low absorption energy. As the wire with wire symbol W22 was a flux-cored wire with seams, the wire was twisted at the welding, and its beads showed a meander shape, so that the bead shapes were deteriorated. Additionally, as the total amount of the hydrogen in the wire was high, diffusible hydrogen content was high, too, which causes cold cracking.

As the wire with wire symbol W23 contained a small amount of Mn, the tensile strength showed a low value. As the wire with wire symbol W24 contained a large amount of Mn, the tensile strength was high and absorption energy showed a low value. As the wire with wire symbol W25 contained a large amount of Mo, the tensile strength was high, and absorption energy showed a low value. As the wire with wire symbol W26 contained a small amount of Ni, the tensile strength and absorption energy showed low values. As the wire with wire symbol W27 contained a large amount of Ni, absorption energy showed a low value.

**Claims**

1. A flux-cored wire filled with flux in a steel sleeve for submerged arc welding of low-temperature steel, **characterized in that** the steel sleeve and/or the flux, in total contains 0.02-0.30% C, 0.08-0.5% Si, 1.2-3.0% Mn, 0.5-3.5% Ni and 0.03-0.8% Mo with respect to the total mass% of the wire, that the flux contains 0.01-0.27% C and 2-15% CaF$_2$, that the residue consists of Fe in the steel sleeve, and Fe in alloy powders, iron powders and incidental impurities, that the total hydrogen content in the wire is 50ppm or lower, and that the flux filling ratio of the flux in the above-mentioned component is between 10% and 30%.

2. A flux-cored wire for submerged arc welding of low-temperature steel according to claim 1, **characterized in that** the steel sleeve does not have any seams.

3. A submerged arc welding method for low-temperature steel, **characterized in that** melt flux with basicity BA expressed in the below-mentioned formula (1) being 1.0-4.0, and the wire according to claim 1 or 2 are welded in combination:

$$\text{basicity } BA = [CaO+MgO+CaF_2+BaO+0.5\times(MnO+FeO)] / [SiO_2+0.5\times(Al_2O_3+TiO_2+ZrO_2)] \quad ...(1),$$

wherein each component stands for mass % of each component.

[Figure 1]

30°

13mm

25mm

[Figure 2]

1 Welding Chip

2 Wire

Welding Direction

[Figure 3]

Welding Direction

1 Welding Chip

2 Wire

Europäisches
Patentamt

European
Patent Office

Office européen
des brevets

# EUROPEAN SEARCH REPORT

Application Number

EP 08 01 8810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 62 061798 A (NIPPON STEEL CORP) 18 March 1987 (1987-03-18) * abstract; table 3 * | 1-3 | INV. B23K35/02 B23K35/30 B23K35/362 B23K35/368 |
| X | JP 63 212092 A (NIPPON STEEL CORP) 5 September 1988 (1988-09-05) * abstract * | 1-3 | |
| X | JP 2000 263284 A (NIPPON STEEL CORP) 26 September 2000 (2000-09-26) * abstract * | 1-3 | |
| A | JP 61 242791 A (NIPPON STEEL CORP) 29 October 1986 (1986-10-29) * abstract * | 1-3 | |
| A | CN 1 565 793 A (NANYANG PETROLEUM MACHINE FACT [CN]) 19 January 2005 (2005-01-19) * abstract * | 1-3 | |

TECHNICAL FIELDS
SEARCHED    (IPC)

B23K

The present search report has been drawn up for all claims

| Place of search | Date of completion of the search | Examiner |
|---|---|---|
| The Hague | 6 March 2009 | Chebeleu, Alice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 01 8810

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2009

| Patent document cited in search report | | Publication date | Patent family member(s) | Publication date |
|---|---|---|---|---|
| JP 62061798 | A | 18-03-1987 | NONE | |
| JP 63212092 | A | 05-09-1988 | NONE | |
| JP 2000263284 | A | 26-09-2000 | NONE | |
| JP 61242791 | A | 29-10-1986 | NONE | |
| CN 1565793 | A | 19-01-2005 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006142377 A
- JP 48085443 A
- JP 49103858 A
- JP 61242791 A